# FASCICULE DE BREVET EUROPEEN

(11) **EP 3 948 015 B1**
(45) Date de publication et mention de la délivrance du brevet: **09.09.2026**
(21) Numéro de dépôt: 20707442.8
(22) Date de dépôt: 28.02.2020
(51) Int. Cl.: F16F 15/14

(54) **DISPOSITIF D'AMORTISSEMENT PENDULAIRE**
PENDELDÄMPFUNGSVORRICHTUNG
PENDULUM DAMPING DEVICE

(30) Priorité: 03.04.2019 FR 1903550
(43) Date de publication de la demande: 09.02.2022
(73) Titulaire: VALEO EMBRAYAGES, 80009 Amiens (FR)
(72) Inventeur: RENAULT, Alexandre, 95892 CERGY PONTOISE (FR)
(74) Mandataire: Valeo Powertrain Systems
(86) Numéro de dépôt international: PCT/EP2020/055354
(87) Numéro de publication internationale: WO 2020/200601

(56) Documents cités:
- DE-A1- 102011 016 568
- DE-A1- 102015 220 419
- DE-A1- 102016 125 256
- FR-A1- 3 033 187
- US-A1- 2017 114 858
- US-A1- 2018 231 098

## Description

La présente invention concerne un dispositif d'amortissement pendulaire, notamment pour un système de transmission de véhicule automobile.

Dans une telle application, le dispositif d'amortissement pendulaire peut être intégré à un système d'amortissement de torsion d'un embrayage apte à relier sélectivement le moteur thermique à la boîte de vitesses, afin de filtrer les vibrations dues aux acyclismes du moteur. Un tel système d'amortissement de torsion est par exemple un double volant amortisseur.

En variante, dans une telle application, le dispositif d'amortissement pendulaire peut être intégré à un disque d'embrayage à friction ou à un convertisseur de couple hydrodynamique ou à un volant solidaire du vilebrequin ou à un double embrayage à sec ou humide ou à un simple embrayage humide ou à un groupe motopropulseur hybride.

Un tel dispositif d'amortissement pendulaire met classiquement en œuvre un support et un ou plusieurs corps pendulaires mobiles par rapport à ce support, le déplacement par rapport au support de chaque corps pendulaire étant guidé par deux organes de roulement coopérant d'une part avec des pistes de roulement solidaires du support, et d'autre part avec des pistes de roulement solidaires des corps pendulaires. Chaque corps pendulaire comprend par exemple deux masses pendulaires rivetées entre elles.

Il est connu, par exemple du brevet EP2652355, de prévoir un corps pendulaire dont le déplacement par rapport au support combine une translation autour d'un axe fictif et une rotation du corps pendulaire sur lui-même, un tel déplacement du corps pendulaire étant parfois appelé « mouvement combiné ». EP2652355 enseigne notamment de guider le déplacement du corps pendulaire par des organes de roulement roulant sur des pistes de roulement de forme libre, sans expliquer quelles seraient ces formes libres.

DE 10 2016 125 256, US2018/231098 et FR 3 033 187 divulguent des dispositifs d'amortissement pendulaire ne précisant pas la forme de certaines pistes de roulement.

Le document US2017/114858 décrit un dispositif selon le préambule de la revendication 1.

Il existe un besoin pour permettre au corps pendulaire de présenter un mouvement combiné à l'aide de pistes de roulement réalisées de façon simple.

L'invention a pour objet de répondre à ce besoin et elle y parvient, selon l'un de ses aspects, à l'aide d'un dispositif d'amortissement pendulaire, comprenant :
- un support mobile en rotation autour d'un axe,
- au moins un corps pendulaire, mobile par rapport au support, et
- au moins un organe de roulement guidant le déplacement du corps pendulaire par rapport au support, cet organe de roulement coopérant avec au moins une première piste de roulement solidaire du support et avec au moins une deuxième piste de roulement solidaire du corps pendulaire,
l'une de la première piste de roulement et de la deuxième piste de roulement définissant un arc de cercle et l'autre de la première piste de roulement et de la deuxième piste de roulement définissant une forme autre qu'un arc de cercle.

L'invention permet que le corps pendulaire soit déplacé par rapport au support à la fois en translation autour d'un axe fictif parallèle à l'axe de rotation du support, et également en rotation sur lui-même, notamment en rotation autour de son centre de gravité, à l'aide de pistes de roulement dont la réalisation est moins complexe étant donné que l'une de ces pistes de roulement définit un arc de cercle.

Au sens de la présente demande :
- « axialement » signifie « parallèlement à l'axe de rotation »,
- « radialement » signifie « le long d'une droite appartenant à un plan orthogonal à l'axe de rotation et coupant cet axe de rotation»,
- « angulairement » ou « circonférentiellement » signifie « autour de l'axe de rotation »,
- « orthoradialement » signifie « perpendiculairement à une direction radiale »,
- « solidaire » signifie « rigidement couplé »,
- l'ordre d'excitation d'un moteur thermique est égal au nombre d'explosions de ce moteur par tour de vilebrequin,
- la position de repos d'un corps pendulaire est celle dans laquelle ce corps pendulaire est centrifugé sans être soumis à des oscillations de torsion provenant des acyclismes du moteur thermique. Pour cette position de repos, la valeur de l'abscisse curviligne du centre de gravité du corps pendulaire est nulle, et
- une valeur d'ordre est filtrée par le dispositif d'amortissement pendulaire lorsque le rapport entre : l'amplitude d'une oscillation de torsion à cette valeur d'ordre en présence du dispositif d'amortissement pendulaire, et cette même amplitude en l'absence du dispositif d'amortissement pendulaire est inférieur à 0,2, notamment inférieur à 0,1.

Selon un exemple de mise en œuvre de l'invention, la deuxième piste de roulement définit un arc de cercle et la première piste de roulement définit une forme autre qu'un arc de cercle. Cependant, en variante, la première piste de roulement définit un arc de cercle et la deuxième piste de roulement définit une forme autre qu'un arc de cercle.

La première piste de roulement présente un point de repos, correspondant au point de contact entre l'organe de roulement et cette première piste de roulement lorsque le corps pendulaire est dans sa position de repos, et lorsque la première piste de roulement définit une forme autre qu'un arc de cercle, cette première piste de roulement peut présenter une discontinuité de forme, qui peut impliquer une discontinuité de courbure, au passage de ce point de repos. Du fait de cette discontinuité de forme, une asymétrie est créée dans la première piste de roulement.

Lorsque la première piste de roulement présente une discontinuité de forme au passage du point de repos, la première piste de roulement peut définir un arc de cercle d'un côté du point de repos et définir une forme différente d'un arc de cercle de l'autre côté du point de repos. Le rayon de l'arc de cercle défini par la deuxième piste de roulement peut être égal, ou supérieur, ou inférieur, au rayon de l'arc de cercle défini par une partie de la première piste de roulement.

Dans un exemple plus précis, la première piste de roulement définit un arc de cercle d'un côté du point de repos et elle définit une forme présentant une courbure continument variable de l'autre côté du point de repos, notamment une courbure continument croissante ou continument décroissante de l'autre côté de ce point de repos. On a par exemple pour la première piste de roulement un arc de cercle d'un côté du point de repos et une spirale d'Archimède de l'autre côté du point de repos.

Dans tout ce qui précède, le dispositif d'amortissement pendulaire peut comprendre deux organes de roulement guidant le déplacement du corps pendulaire par rapport au support, chaque organe de roulement roulant sur une première piste de roulement solidaire du support et propre audit organe de roulement et sur une deuxième piste de roulement solidaire du corps pendulaire et propre audit organe de roulement,
l'une de ces premières pistes de roulement peut définir un arc de cercle à partir du point de repos de cette première piste en se déplaçant dans le sens trigonométrique et une forme différente d'un arc de cercle à partir du point de repos en se déplaçant dans le sens non-trigonométrique et, l'autre de ces premières pistes de roulement peut définir un arc de cercle à partir du point de repos de cette autre première piste en se déplaçant dans le sens non-trigonométrique et une forme différente d'un arc de cercle à partir du point de repos en se déplaçant dans le sens trigonométrique.

Autrement dit, dans le cas d'un corps pendulaire dont le déplacement par rapport au support est guidé par deux organes de roulement, les deux premières pistes de roulement associées à ce corps pendulaire peuvent avoir des formes inversées, les portions en regard de ces premières pistes de roulement, encore appelées « portions proximales » par la suite, ayant la même forme, par exemple un arc de cercle, respectivement par exemple une forme différente d'un arc de cercle, tandis que les portions les plus éloignées entre elles de ces premières pistes de roulement, encore appelées « portions distales » par la suite, ont la même forme, par exemple une forme différente d'un arc de cercle, respectivement par exemple un arc de cercle.

Les deux premières pistes de roulement associées au guidage du déplacement d'un même corps pendulaire peuvent être symétriques par rapport à un axe de symétrie qui peut définir l'axe de symétrie du corps pendulaire dans sa position de repos. Cet axe de symétrie pour les deux premières pistes de roulement peut s'étendre radialement.

L'organe de roulement est apte à se déplacer le long de la première piste de roulement entre deux positions extrêmes disposées de part et d'autre du point de repos, et le point de repos peut ou non être disposé à la moitié de la longueur de la première piste de roulement, cette longueur étant mesurée entre ces deux positions extrêmes.

Dans tout ce qui précède, le dispositif d'amortissement pendulaire peut comprendre un unique support, et le corps pendulaire peut comprendre : une première masse pendulaire disposée axialement d'un premier côté du support et une deuxième masse pendulaire disposée axialement d'un deuxième côté du support, la première masse pendulaire et la deuxième masse pendulaire étant solidarisées entre elles par au moins un organe de liaison.

Selon une première réalisation préférée d'un dispositif d'amortissement pendulaire à support unique, la première et la deuxième masse pendulaire sont rigidement reliées entre elles par un ou plusieurs organes de liaison.

Selon cette première réalisation préférée, l'organe de roulement peut coopérer avec une seule première piste de roulement et avec une seule deuxième piste de roulement, et cette deuxième piste de roulement est définie par un organe de liaison du corps pendulaire. Le fait que cette deuxième piste de roulement ait une forme d'arc de cercle peut simplifier la fabrication de la pièce forment l'organe de liaison. Le montage de la pièce formant l'organe de liaison avec les masses pendulaires pour former le corps pendulaire peut aussi être plus simple. Une portion du contour de cet organe de liaison définit par exemple la deuxième piste de roulement. En variante, un revêtement peut être déposé sur cette portion du contour de l'organe de liaison pour former la deuxième piste de roulement. Un tel organe de liaison est par exemple emmanché en force via chacune de ses extrémités axiales dans une ouverture ménagée dans une des masses pendulaires. En variante, l'organe de liaison peut être soudé ou vissé ou riveté via ses extrémités axiales sur chacune de la première et de la deuxième masse pendulaire.

Selon cette première réalisation préférée, lorsque le déplacement de chaque corps pendulaire par rapport au support est guidé par au moins deux organes de roulement, notamment exactement deux organes de roulement, deux organes de liaison coopérant chacune avec un organe de roulement peuvent être prévus. En variante, un seul organe de liaison peut être prévu, et cet organe de liaison unique peut définir deux deuxièmes pistes de roulement distinctes, l'une de ces deuxièmes pistes coopérant avec l'un des organes de roulement et l'autre de ces deuxièmes pistes coopérant avec l'autre des organes de roulement.

Chaque organe de roulement peut alors être uniquement sollicité en compression entre les première et deuxième pistes de roulement mentionnées ci-dessus. Ces première et deuxième pistes de roulement coopérant avec un même organe de roulement peuvent être au moins en partie radialement en regard, c'est-à-dire qu'il existe des plans perpendiculaires à l'axe de rotation dans lesquels ces pistes de roulement s'étendent toutes les deux.

Selon la première réalisation préférée, chaque organe de roulement peut être reçu dans une fenêtre du support recevant déjà un organe de liaison et ne recevant aucun autre organe de roulement. Cette fenêtre est par exemple définie par un contour fermé dont une portion définit la première piste de roulement solidaire du support qui coopère avec cet organe de roulement.

Selon une deuxième réalisation préférée d'un dispositif d'amortissement pendulaire à unique support, le dispositif d'amortissement pendulaire comprend encore un corps pendulaire avec une première et une deuxième masse pendulaire axialement décalées et rigidement reliées entre elles par un ou plusieurs organes de liaison, mais chaque organe de roulement coopère d'une part avec une seule première piste de roulement solidaire du support, et d'autre part avec deux deuxièmes pistes de roulement solidaires du corps pendulaire. Chaque masse pendulaire présente alors une ouverture dont une partie du contour définit une de ces deuxièmes pistes de roulement.

Selon cette deuxième réalisation préférée, chaque organe de liaison regroupe par exemple plusieurs rivets, et cet organe de liaison est reçu dans une fenêtre du support, tandis que l'organe de roulement est reçu dans une ouverture du support, distincte d'une fenêtre recevant un organe de liaison. Selon cette deuxième réalisation préférée, chaque organe de liaison peut en variante être un rivet.

Selon cette deuxième réalisation préférée, lorsque deux organes de roulement guident le déplacement du corps pendulaire par rapport au support, chaque organe de roulement coopère avec une première piste de roulement dédiée à cet organe de roulement et avec deux deuxièmes pistes de roulement dédiées à cet organe de roulement.

Selon cette deuxième réalisation préférée, chaque organe de roulement peut alors comprendre successivement axialement:
- une portion disposée dans une ouverture de la première masse pendulaire et coopérant avec la deuxième piste de roulement formée par une partie du contour de cette ouverture,
- une portion disposée dans une ouverture du support et coopérant avec la première piste de roulement formée par une partie du contour de cette ouverture, et
- une portion disposée dans une ouverture de la deuxième masse pendulaire et coopérant avec la deuxième piste de roulement formée par une partie du contour de cette ouverture.

Le dispositif d'amortissement pendulaire peut encore être autre qu'un dispositif à support unique, comprenant par exemple deux supports axialement décalés et solidaires entre eux, le corps pendulaire comprenant au moins une masse pendulaire disposée axialement entre les deux supports. Le corps pendulaire comprend par exemple plusieurs masses pendulaires solidarisées entre elles. Toutes ces masses pendulaires d'un même corps pendulaire peuvent être disposées axialement entre les deux supports. En variante seule(s) certaine(s) masse(s) pendulaire(s) du corps pendulaire s'étend(ent) axialement entre les deux supports, d'autre(s) masse(s) pendulaire(s) de ce corps pendulaire s'étendant axialement au-delà de l'un ou de l'autre des supports. L'organe de roulement peut alors coopérer avec deux premières pistes de roulement, chacune étant solidaire d'un support respectif, et avec une seule deuxième piste de roulement solidaire de la masse pendulaire. Chaque première piste de roulement est par exemple définie par une partie du contour d'une ouverture ménagée dans un support respectif et la deuxième piste de roulement est définie par une partie du contour d'une ouverture ménagée dans la masse pendulaire.

Dans tout ce qui précède, chaque organe de roulement peut coopérer avec la ou les pistes de roulement solidaires du support et avec la ou les pistes de roulement solidaires du corps pendulaire uniquement via sa surface extérieure. Chaque organe de roulement est par exemple un rouleau réalisé en acier. Le rouleau peut être creux ou plein. Ce rouleau peut ne présenter qu'un unique diamètre, tout le long de son axe longitudinal. En variante, ce rouleau présente, longitudinalement parlant, des portions de diamètre différent, par exemple une portion centrale d'un premier diamètre entourée longitudinalement parlant par deux portions d'un deuxième diamètre, inférieur au premier diamètre. En variante encore, le rouleau présente des portions de diamètre différent et variant de façon monotone qui se succèdent, longitudinalement parlant. Le dispositif comprend par exemple un nombre de corps pendulaires compris entre deux et huit, notamment trois, quatre, cinq ou six corps pendulaires. Chacun de ces corps pendulaires peut filtrer, lors de son déplacement par rapport au support la première valeur d'ordre prédéfinie et la deuxième valeur d'ordre prédéfinie.

Tous ces corps pendulaires peuvent se succéder circonférentiellement. Le dispositif peut ainsi comprendre une pluralité de plans perpendiculaires à l'axe de rotation dans chacun desquels tous les corps pendulaires sont disposés.

Dans tout ce qui précède, le support peut être réalisé d'une seule pièce, étant par exemple entièrement métallique.

Dans tout ce qui précède, dans le dispositif d'amortissement pendulaire, toutes les premières pistes de roulement solidaires du support peuvent avoir exactement la même forme, le cas échéant moyennant une inversion comme mentionné ci-dessus, entre elles et/ou toutes les deuxièmes pistes de roulement solidaires du corps pendulaires peuvent avoir exactement la même forme entre elles.

Dans tout ce qui précède encore, deux corps pendulaires circonférentiellement adjacents peuvent être reliés entre eux par au moins un organe de rappel élastique, par exemple selon l'enseignement des demandes EP 3 153 741, EP 3 380 750, EP 3 190 310. L'enseignement de ces demandes de brevet est incorporé par référence à la présente demande en ce qu'il concerne la connexion entre les corps pendulaires circonférentiellement adjacentes.En variante, deux corps pendulaires circonférentiellement voisins peuvent être reliés par une connexion impliquant un frottement axial, par exemple selon l'enseignement de la demande EP 3 332 147. L'enseignement de cette demande de brevet est incorporé par renvoi à la présente demande en ce qu'il concerne la connexion entre les corps pendulaires circonférentiellement adjacents.

L'invention a encore pour objet, selon un autre de ses aspects, un composant pour système de transmission d'un véhicule automobile, le composant étant notamment un double volant amortisseur, un convertisseur de couple hydrodynamique, un volant solidaire du vilebrequin, un double embrayage à sec ou humide, un simple embrayage humide, un composant de groupe motopropulseur hybride, ou un disque d'embrayage à friction, comprenant un dispositif d'amortissement pendulaire défini ci-dessus.

Le support du dispositif d'amortissement pendulaire peut alors être l'un parmi :
- un voile du composant,
- une rondelle de guidage du composant,
- une rondelle de phasage du composant, ou
- un support distinct dudit voile, de ladite rondelle de guidage et de ladite rondelle de phasage.

Dans le cas où le dispositif est intégré à un volant solidaire du vilebrequin, le support peut être solidaire de ce volant.

L'invention pourra être mieux comprise à la lecture de la description qui va suivre d'exemples non limitatifs et à l'examen du dessin annexé sur lequel :
- la Figure 1 représente un dispositif d'amortissement pendulaire auquel peut être appliquée l'invention,
- la Figure 2 représente un détail de la figure 1,
- la Figure 3 représente un autre dispositif d'amortissement pendulaire auquel peut être appliquée l'invention,
- la Figure 4 est une vue des pistes de roulement selon un exemple de mise en œuvre de l'invention, et
- la Figure 5 est une vue des pistes de roulement selon une variante de l'exemple de mise en œuvre de la Figure 4.

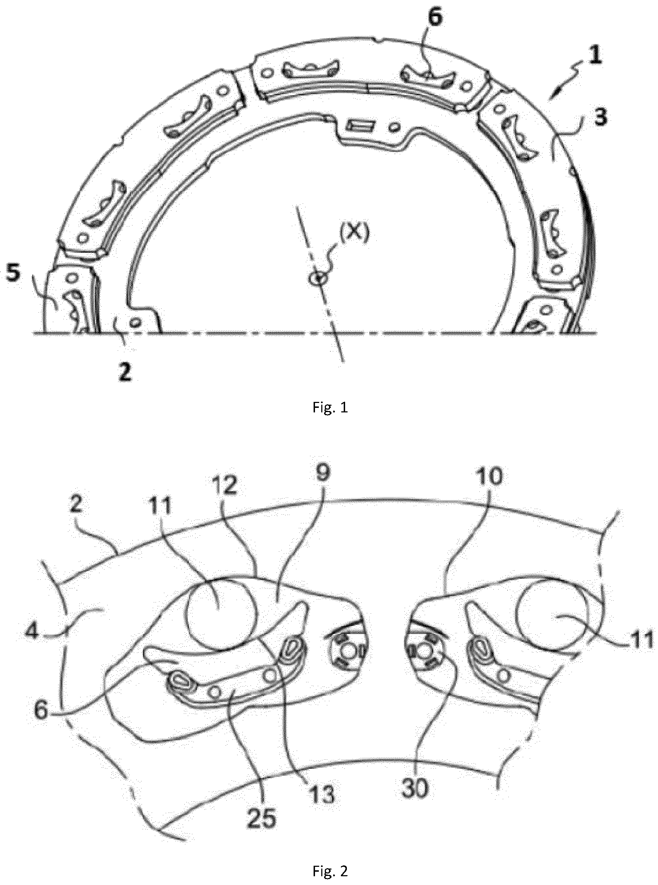

On a représenté sur la figure 1 un exemple de dispositif d'amortissement pendulaire 1. Le dispositif 1 est notamment apte à équiper un système de transmission de véhicule automobile, étant par exemple intégré à un composant non représenté d'un tel système de transmission, ce composant étant par exemple un double volant amortisseur, un convertisseur de couple hydrodynamique, un volant solidaire du vilebrequin, un double embrayage à sec ou humide, un simple embrayage humide, un composant de groupe motopropulseur hybride, ou un disque d'embrayage à friction.

Ce composant peut faire partie d'un groupe motopropulseur d'un véhicule automobile, ce dernier comprenant un moteur thermique notamment à trois ou quatre cylindres.

Sur la figure 1, le dispositif 1 est au repos, c'est-à-dire qu'il ne filtre pas les oscillations de torsion transmises par la chaîne de propulsion du fait des acyclismes du moteur thermique.

De manière connue, un tel composant peut comprendre un système d'amortissement de torsion présentant au moins un élément d'entrée, au moins un élément de sortie, et des organes de rappel élastique à action circonférentielle qui sont interposés entre lesdits éléments d'entrée et de sortie. Au sens de la présente demande, les termes « entrée » et « sortie » sont définis par rapport au sens de transmission du couple depuis le moteur thermique du véhicule vers les roues de ce dernier.

Le dispositif 1 comprend dans l'exemple considéré:
- un support 2 apte à se déplacer en rotation autour d'un axe X, et
- une pluralité de corps pendulaires 3 mobiles par rapport au support 2.

Dans l'exemple de la figure 1, six corps pendulaires 3 sont prévus, étant répartis de façon uniforme sur le pourtour de l'axe X.

Le support 2 du dispositif d'amortissement 1 peut être constitué par :
- un élément d'entrée du système d'amortissement de torsion,
- un élément de sortie, ou
- un élément de phasage intermédiaire disposé entre deux séries de ressort du système d'amortissement, ou
- un élément lié en rotation à un des éléments précités et distinct de ces derniers, étant alors par exemple un support propre au dispositif 1.

Le support 2 est notamment une rondelle de guidage ou une rondelle de phasage.

Le support 2 peut encore être autre, tel qu'un flasque.

Dans l'exemple considéré, le support 2 présente globalement une forme d'anneau comportant deux côtés opposés 4 qui sont ici des faces planes.

Comme on peut le deviner sur la figure 1, chaque corps pendulaire 3 comprend dans l'exemple considéré :
- deux masses pendulaires 5, chaque masse pendulaire 5 s'étendant axialement en regard d'un côté 4 du support 2, et
- deux organes de liaison 6 solidarisant les deux masses pendulaires 5.

Les organes de liaison 6, encore appelés « entretoises », sont dans l'exemple considéré décalés angulairement. Dans une variante non représentée, un unique organe de liaison peut être utilisé pour solidariser les deux masses pendulaires.

Dans l'exemple de la figure 1, chaque extrémité d'un organe de liaison 6 est emmanchée en force dans une ouverture ménagée dans une des masses pendulaires 5 du corps pendulaire 3, de manière à solidariser entre elles ces deux masses pendulaires 5.

Chaque organe de liaison 6 s'étend en partie dans une fenêtre 9 ménagée dans le support. Dans l'exemple considéré, la fenêtre 9 définit un espace vide à l'intérieur du support, cette fenêtre étant délimitée par un contour fermé 10.

Le dispositif 1 comprend encore dans l'exemple considéré des organes de roulement 11 guidant le déplacement des corps pendulaires 3 par rapport au support 2. Les organes de roulement 11 sont ici des rouleaux, comme on le verra par la suite. Dans l'exemple des figures 1 et 2, chaque rouleau conserve un diamètre sensiblement constant sur toute sa longueur.

Comme on peut le voir sur la figure 2, le dispositif 1 peut également comprendre des organes d'amortissement de butée 25 aptes à venir simultanément en contact avec un organe de liaison 6 et avec le support 2 dans certaines positions relatives du support 2 et des masses pendulaires 3, telles que les venues en butée à l'issue d'un déplacement depuis la position de repos pour filtrer une oscillation de torsion ou lors d'une chute radiale du corps pendulaire 3. Chaque organe d'amortissement de butée 25 est ici solidaire d'un corps pendulaire 3, étant monté sur chaque corps pendulaire 3 et disposé de manière à s'interposer radialement entre un organe de liaison 6 de ce corps pendulaire 3 et le contour 10 de l'ouverture 9.

Dans l'exemple décrit, le mouvement par rapport au support 2 de chaque corps pendulaire 3 est guidé par deux organes de roulement 11, chacun d'entre eux coopérant dans l'exemple des figures 1 et 2 avec l'un des organes de liaison 6 du corps pendulaire 3.

Comme on peut le voir sur la figure 2, sur laquelle chaque corps pendulaire 3 est au repos, chaque organe de roulement 11 coopère par roulement avec une seule première piste de roulement 12 solidaire du support 2, et avec une seule deuxième piste de roulement 13 solidaire du corps pendulaire 3 pour guider le déplacement du corps pendulaire en translation autour d'un axe fictif parallèle à l'axe de rotation X du support 2 et en rotation, ici autour du centre de gravité dudit corps pendulaire 3.

Dans l'exemple considéré, chaque deuxième piste de roulement 13 est formée par une portion du bord radialement extérieur d'un organe de liaison 6. Dans un exemple non représenté, un unique organe de liaison 6 est prévu pour tout le corps pendulaire 3, et une portion de son bord radialement extérieur définit une deuxième piste de roulement 13 tandis qu'une autre portion de son bord radialement extérieur définit une autre deuxième piste de roulement 13.

Chaque première piste de roulement 12 est définie par une partie du contour d'une fenêtre 9 ménagée dans le support 2 et recevant l'un des organes de liaison 6.

Chaque première piste de roulement 12 est ainsi disposée radialement en regard d'une deuxième piste de roulement 13, de sorte qu'une même surface de roulement d'un organe de roulement 11 roule alternativement sur la première piste de roulement 12 et sur la deuxième piste de roulement 13. La surface de roulement de l'organe de roulement est ici un cylindre de rayon constant.

On observe encore, sur la figure 2, que des pièces d'interposition 30, encore appelées « patin » peuvent être prévues. Un ou plusieurs patins 30 sont par exemple portés de manière fixe par chaque masse pendulaire 5.

Le déplacement de chaque corps pendulaire 3 par rapport au support 2 s'effectue depuis la position de repos des figures 1 et 2 en direction de positions de butée qui encadrent circonférentiellement la position de repos. La distance curviligne mesurée le long d'une première 12 ou deuxième 13 piste de roulement entre les deux positions occupées par l'organe de roulement 11 dans ces positions de butée respectives définit la longueur de ladite piste de roulement, ces positions de butée définissant entre elles toute ladite piste de roulement.

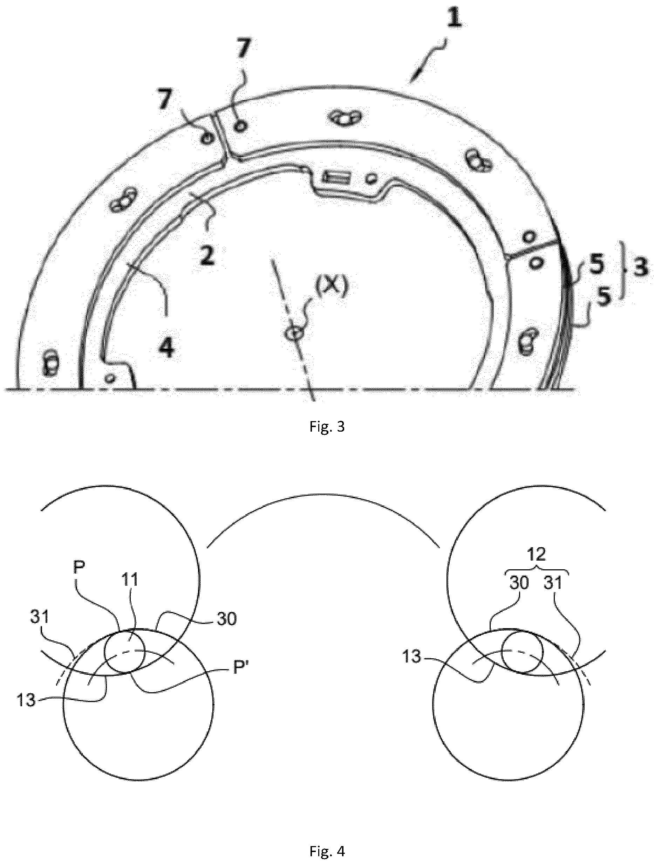

On va maintenant décrire en référence à la figure 4 un exemple de mise en œuvre de l'invention, permettant que le corps pendulaire 3 se déplace par rapport au support 2 selon un mouvement combiné, comme défini ci-dessus.

Dans l'exemple considéré, chaque deuxième piste de roulement 13 ménagée par un organe de liaison 6 est un arc de cercle. La valeur du rayon est par exemple constante d'une deuxième piste de roulement 13 à l'autre pour un même corps pendulaire, cette valeur étant par exemple de l'ordre de quelques cm, par exemple de 35 mm pour chaque deuxième piste de roulement 13.

Toujours dans l'exemple considéré, chaque première piste de roulement 12 présente une forme différente d'un arc de cercle. Chaque première piste de roulement 12 présente un point de repos P correspondant au point de contact de l'organe de roulement 11 et de cette première piste de roulement 12 lorsque le corps pendulaire 3 est dans la position de repos, et ce point de repos définit dans l'exemple considéré une discontinuité de courbure pour la première piste de roulement 12.

Dans l'exemple considéré, chaque point de repos P sépare pour une première piste de roulement 12 une portion proximale 30 et une portion distale 31. Au sens de la présente demande, « portion proximale» se réfère à la portion de la première piste de roulement 12 qui est la plus proche de l'autre première piste de roulement 12 associée au même corps pendulaire 3, et « portion distale » se réfère à la portion de la première piste de roulement 12 qui est la plus éloignée de l'autre première piste de roulement 12 associée au même corps pendulaire 3.

Toujours dans l'exemple considéré, deux premières pistes de roulement 12 associées à un même corps pendulaire ont leur portion proximale de même forme entre elles, et elles ont leur portion distale de même forme entre elles.

Dans l'exemple de la figure 4, chaque portion proximale 30 est un cercle, ayant par exemple le même rayon pour toutes les premières pistes de roulement 12. Cette même valeur de rayon est dans l'exemple considéré inférieure à la valeur de rayon des deuxièmes pistes de roulement 13, étant par exemple égale à 25 mm dans cet exemple. Chaque portion distale 31 a ici une forme différente d'un arc de cercle, par exemple une forme correspondant à une courbure continument croissante comme une spirale d'Archimède.

On constate ainsi que les deux premières pistes de roulement 12 associées à un même corps pendulaire 3 sont symétriques par rapport à un plan P qui constitue un plan de symétrie pour le corps pendulaire 3.

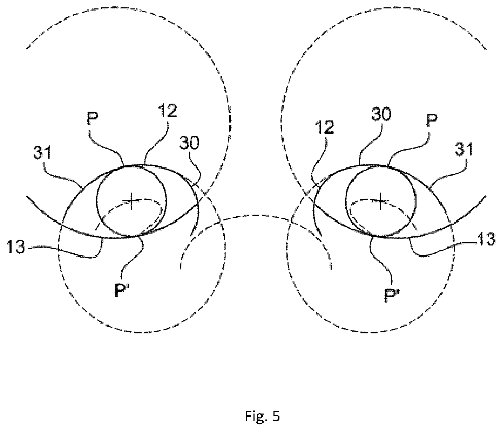

Dans la variante de la figure 5, chaque portion distale 31 est un cercle tandis que chaque portion proximale 30 a une forme différente d'un arc de cercle.

L'invention n'est pas limitée aux exemples qui viennent d'être décrits.

En particulier, l'invention peut être mise en œuvre dans un dispositif d'amortissement pendulaire 1 tel que représenté sur la figure 3. Dans ce cas, les organes de liaison entre deux masses pendulaires 5 d'un corps pendulaire 3 sont des rivets 7. Les deuxièmes pistes de roulement 13 sont alors formées par des parties du contour d'ouverture ménagées dans des masses pendulaires 5.

Dans d'autres variantes encore, ce ne sont pas les deuxièmes pistes de roulement 13 qui sont des arcs de cercle et les premières pistes de roulement 12 qui ont une forme autre qu'un arc de cercle mais l'inverse. Autrement dit, chaque première piste de roulement 12 est un arc de cercle et chaque deuxième piste de roulement 13 a une forme différente d'un arc de cercle. Chaque deuxième piste de roulement présente un point de repos P', correspondant au point de contact de l'organe de roulement 11 sur cette deuxième piste de roulement 13 lorsque le corps pendulaire est dans la position de repos, et ce point de repos P' définit une discontinuité de forme pour la deuxième piste de roulement 13. Similairement à ce qui a été décrit plus haut, chaque deuxième piste de roulement peut comprendre une portion proximale et une portion séparées par le point de repos P', et :
- chaque portion proximale est un cercle et chaque portion distale a une forme différente d'un arc de cercle, par exemple une forme correspondant à une courbure continument croissante, ou
- chaque portion distale est un cercle tandis que chaque portion proximale a une forme différente d'un arc de cercle, par exemple une forme correspondant à une courbure continument croissante.

## Revendications

1. Dispositif d'amortissement pendulaire (1), comprenant :
- un support (2) mobile en rotation autour d'un axe (X),
- au moins un corps pendulaire (3), mobile par rapport au support (2), et,
- au moins un organe de roulement (11) guidant le déplacement du corps pendulaire (3) par rapport au support (2), cet organe de roulement (11) coopérant avec au moins une première piste de roulement (12) solidaire du support (2) et avec au moins une deuxième piste de roulement (13) solidaire du corps pendulaire (3),
l'une de la première piste de roulement (12) et de la deuxième piste de roulement (13) définissant un arc de cercle,
**caractérisé par le fait que** l'autre de la première piste de roulement (12) et de la deuxième piste de roulement (13) définit une forme autre qu'un arc de cercle, présentant un point de repos (P, P') correspondant au point de contact entre l'organe de roulement (11) et cette autre piste de roulement (12,13), et cette autre piste de roulement (12, 13) définissant un arc de cercle d'un côté du point de repos (P,P') et définissant une forme différente d'un arc de cercle de l'autre côté du point de repos (P, P').

2. Dispositif selon la revendication 1, la deuxième piste de roulement (13) définissant un arc de cercle et la première piste de roulement (12) définissant la forme autre qu'un arc de cercle.

3. Dispositif selon la revendication 1 ou 2, la première piste de roulement (12) définissant un arc de cercle d'un côté du point de repos (P) et définissant une forme présentant une courbure continument variable de l'autre côté du point de repos (P), notamment une courbure continument croissante ou continument décroissante.

4. Dispositif selon l'une des revendications précédentes, comprenant deux organes de roulement (11) guidant le déplacement du corps pendulaire (3) par rapport au support (2), chaque organe de roulement (11) roulant sur une première piste de roulement (12) solidaire du support (2) et propre audit organe de roulement et sur une deuxième piste de roulement (13) solidaire du corps pendulaire (3) et propre audit organe de roulement,
l'une de ces premières, respectivement deuxièmes, pistes de roulement (12,13) définissant un arc de cercle à partir du point de repos (P) de cette piste en se déplaçant dans le sens trigonométrique et une forme différente d'un arc de cercle à partir du point de repos (P) en se déplaçant dans le sens non-trigonométrique et,
l'autre de ces premières, respectivement deuxièmes, pistes de roulement (12) définissant un arc de cercle à partir du point de repos (P) de cette piste en se déplaçant dans le sens non trigonométrique et une forme différente d'un arc de cercle à partir du point de repos en se déplaçant dans le sens trigonométrique.

5. Dispositif selon l'une quelconque des revendications précédentes, l'organe de roulement (11) étant apte à se déplacer le long de la première ou deuxième piste de roulement entre deux positions extrêmes disposées de part et d'autre du point de repos, et le point de repos n'étant pas disposé à la moitié de la longueur de la première ou deuxième piste de roulement (11), mesurée entre ces deux positions extrêmes.

6. Dispositif selon l'une quelconque des revendications précédentes, le support du dispositif d'amortissement pendulaire étant unique et le corps pendulaire comprenant deux masses pendulaires (5) respectivement disposées axialement d'un côté du support, ces deux masses pendulaires étant solidarisées entre elles par au moins un organe de liaison (6),
l'organe de roulement (11) roulant sur une unique première piste de roulement (12) et sur :
- une unique deuxième piste de roulement (12) définie par l'organe de liaison (6) ou,
- deux deuxièmes pistes de roulement (13) définies respectivement par une des masses pendulaires (5) du corps pendulaire.

7. Dispositif selon l'une quelconque des revendications 1 à 5, le dispositif d'amortissement pendulaire comprenant deux supports axialement décalés et solidaires, le corps pendulaire comprenant au moins une masse pendulaire disposée axialement entre ces deux supports,
l'organe de roulement roulant sur :
- deux premières pistes de roulement (12) définies respectivement par un des deux supports, et
- une unique première piste de roulement (13) pour la masse pendulaire.

8. Composant pour système de transmission d'un véhicule automobile, le composant étant notamment un double volant amortisseur, un convertisseur de couple hydrodynamique, un volant solidaire du vilebrequin, un double embrayage à sec ou humide, un simple embrayage humide, un composant de groupe motopropulseur hybride, ou un disque de friction, comprenant un dispositif d'amortissement pendulaire selon l'une quelconque des revendications précédentes.

## Patentansprüche

1. Fliehkraftpendelvorrichtung (1), umfassend:
- einen Träger (2), der drehbar um eine Achse (X) beweglich ist,
- mindestens einen Pendelkörper (3), der relativ zum Träger (2) beweglich ist, und,
- mindestens ein Wälzelement (11), das die Bewegung des Pendelkörpers (3) relativ zum Träger (2) führt, wobei dieses Wälzelement (11) mit mindestens einer ersten Laufbahn (12), die fest mit dem Träger (2) verbunden ist, und mit mindestens einer zweiten Laufbahn (13), die fest mit dem Pendelkörper (3) verbunden ist, zusammenwirkt,
wobei eine der ersten Laufbahn (12) und der zweiten Laufbahn (13) einen Kreisbogen definiert,
**dadurch gekennzeichnet, dass** die andere der ersten Laufbahn (12) und der zweiten Laufbahn (13) eine andere Form als einen Kreisbogen definiert, die einen Ruhepunkt (P, P') aufweist, der dem Kontaktpunkt zwischen dem Wälzelement (11) und dieser anderen Laufbahn (12, 13) entspricht, und wobei diese andere Laufbahn (12, 13) auf einer Seite des Ruhepunktes (P, P') einen Kreisbogen definiert und auf der anderen Seite des Ruhepunktes (P, P') eine von einem Kreisbogen abweichende Form definiert.

2. Vorrichtung nach Anspruch 1, wobei die zweite Laufbahn (13) einen Kreisbogen definiert und die erste Laufbahn (12) die andere Form als einen Kreisbogen definiert.

3. Vorrichtung nach Anspruch 1 oder 2, wobei die erste Laufbahn (12) auf einer Seite des Ruhepunktes (P) einen Kreisbogen definiert und auf der anderen Seite des Ruhepunktes (P) eine Form mit einer kontinuierlich variablen Krümmung, insbesondere einer kontinuierlich zunehmenden oder kontinuierlich abnehmenden Krümmung, definiert.

4. Vorrichtung nach einem der vorhergehenden Ansprüche, umfassend zwei Wälzelemente (11), die die Bewegung des Pendelkörpers (3) relativ zum Träger (2) führen, wobei jedes Wälzelement (11) auf einer ersten Laufbahn (12), die fest mit dem Träger (2) verbunden und diesem Wälzelement zugeordnet ist, und auf einer zweiten Laufbahn (13), die fest mit dem Pendelkörper (3) verbunden und diesem Wälzelement zugeordnet ist, abrollt,
wobei eine dieser ersten bzw. zweiten Laufbahnen (12, 13) ausgehend vom Ruhepunkt (P) dieser Bahn bei Bewegung in mathematisch positiver Richtung einen Kreisbogen und ausgehend vom Ruhepunkt (P) bei Bewegung in mathematisch negativer Richtung eine von einem Kreisbogen abweichende Form definiert, und
die andere dieser ersten bzw. zweiten Laufbahnen (12) ausgehend vom Ruhepunkt (P) dieser Bahn bei Bewegung in mathematisch negativer Richtung einen Kreisbogen und ausgehend vom Ruhepunkt bei Bewegung in mathematisch positiver Richtung eine von einem Kreisbogen abweichende Form definiert.

5. Vorrichtung nach einem der vorhergehenden Ansprüche, wobei das Wälzelement (11) entlang der ersten oder zweiten Laufbahn zwischen zwei extremen Positionen, die beiderseits des Ruhepunktes angeordnet sind, beweglich ist, und der Ruhepunkt nicht auf der halben Länge der ersten oder zweiten Laufbahn (11), gemessen zwischen diesen beiden extremen Positionen, angeordnet ist.

6. Vorrichtung nach einem der vorhergehenden Ansprüche, wobei der Träger der Fliehkraftpendelvorrichtung einzig ist und der Pendelkörper zwei Pendelmassen (5) umfasst, die jeweils axial auf einer Seite des Trägers angeordnet sind, wobei diese beiden Pendelmassen durch mindestens ein Verbindungselement (6) fest miteinander verbunden sind,
wobei das Wälzelement (11) auf einer einzigen ersten Laufbahn (12) abrollt und auf:
- einer einzigen zweiten Laufbahn (12), die durch das Verbindungselement (6) definiert ist, oder
- zwei zweiten Laufbahnen (13), die jeweils durch eine der Pendelmassen (5) des Pendelkörpers definiert sind.

7. Vorrichtung nach einem der Ansprüche 1 bis 5, wobei die Fliehkraftpendelvorrichtung zwei axial versetzte und fest verbundene Träger umfasst, wobei der Pendelkörper mindestens eine Pendelmasse umfasst, die axial zwischen diesen beiden Trägern angeordnet ist,
wobei das Wälzelement abrollt auf:
- zwei ersten Laufbahnen (12), die jeweils durch einen der beiden Träger definiert sind, und
- einer einzigen ersten Laufbahn (13) für die Pendelmasse.

8. Komponente für ein Getriebesystem eines Kraftfahrzeugs, wobei die Komponente insbesondere ein Zweimassenschwungrad, ein hydrodynamischer Drehmomentwandler, ein fest mit der Kurbelwelle verbundenes Schwungrad, eine trockene oder nasse Doppelkupplung, eine nasse Einfachkupplung, eine Hybridantriebsstrangkomponente oder eine Reibscheibe ist, umfassend eine Fliehkraftpendelvorrichtung nach einem der vorhergehenden Ansprüche.

## Claims

1. A pendulum damping device (1), comprising:
- a support (2) movable in rotation about an axis (X),
- at least one pendulum body (3), movable relative to the support (2), and,
- at least one rolling element (11) guiding the displacement of the pendulum body (3) relative to the support (2), this rolling element (11) cooperating with at least a first rolling track (12) secured to the support (2) and with at least a second rolling track (13) secured to the pendulum body (3),
one of the first rolling track (12) and the second rolling track (13) defining a circular arc, **characterized in that** the other of the first rolling track (12) and the second rolling track (13) defines a shape other than a circular arc, having a rest point (P, P') corresponding to the point of contact between the rolling element (11) and this other rolling track (12,13), and this other rolling track (12, 13) defining a circular arc on one side of the rest point (P,P') and defining a shape different from a circular arc on the other side of the rest point (P, P').

2. Device according to claim 1, the second rolling track (13) defining a circular arc and the first rolling track (12) defining the shape other than a circular arc.

3. Device according to claim 1 or 2, the first rolling track (12) defining a circular arc on one side of the rest point (P) and defining a shape having a continuously variable curvature on the other side of the rest point (P), in particular a continuously increasing or continuously decreasing curvature.

4. Device according to one of the preceding claims, comprising two rolling elements (11) guiding the displacement of the pendulum body (3) relative to the support (2), each rolling element (11) rolling on a first rolling track (12) secured to the support (2) and specific to said rolling element and on a second rolling track (13) secured to the pendulum body (3) and specific to said rolling element,
one of these first, respectively second, rolling tracks (12,13) defining a circular arc from the rest point (P) of this track moving in the trigonometric direction and a shape different from a circular arc from the rest point (P) moving in the non-trigonometric direction and,
the other of these first, respectively second, rolling tracks (12) defining a circular arc from the rest point (P) of this track moving in the non-trigonometric direction and a shape different from a circular arc from the rest point moving in the trigonometric direction.

5. Device according to any one of the preceding claims, the rolling element (11) being able to move along the first or second rolling track between two extreme positions arranged on either side of the rest point, and the rest point not being arranged at half the length of the first or second rolling track (11), measured between these two extreme positions.

6. Device according to any one of the preceding claims, the support of the pendulum damping device being single and the pendulum body comprising two pendulum masses (5) respectively disposed axially on one side of the support, these two pendulum masses being joined together by at least one connecting member (6),
the rolling element (11) rolling on a single first rolling track (12) and on:
- a single second rolling track (12) defined by the connecting member (6) or,
- two second rolling tracks (13) respectively defined by one of the pendulum masses (5) of the pendulum body.

7. Device according to any one of claims 1 to 5, the pendulum damping device comprising two axially offset and integral supports, the pendulum body comprising at least one pendulum mass disposed axially between these two supports,
the rolling element rolling on:
- two first rolling tracks (12) respectively defined by one of the two supports, and
- a single first rolling track (13) for the pendulum mass.

8. Component for a transmission system of a motor vehicle, the component being in particular a dual mass flywheel, a hydrodynamic torque converter, a flywheel secured to the crankshaft, a dry or wet dual clutch, a wet single clutch, a hybrid powertrain component, or a friction disc, comprising a pendulum damping device according to any one of the preceding claims.
